(19) **Europäisches Patentamt**
**European Patent Office**
**Office européen des brevets**

(11) **EP 1 237 355 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(51) Int Cl.:
***H04N 1/60*** *(2006.01)*

(21) Anmeldenummer: **01128957.6**

(22) Anmeldetag: **06.12.2001**

(54) **Verfahren zur Bestimmung eines Farbprofils für das Drucken mit mehr als drei bunten Druckfarben**

Method of determining a colour profile for printing with more than three colored printing inks

Procédé de détermination d'un profil de couleurs pour l'impression au moyen de plus que trois encres d'impression colorées

(84) Benannte Vertragsstaaten:
**CH DE FR GB LI**

(72) Erfinder: **Siegeritz, Helmut**
**24119 Kronshagen (DE)**

(30) Priorität: **02.03.2001 DE 10110125**

(56) Entgegenhaltungen:
**EP-A- 0 563 498     EP-A- 0 884 894**
**US-A- 4 878 977     US-A- 5 563 724**
**US-A- 5 978 011     US-A- 6 014 457**

(43) Veröffentlichungstag der Anmeldung:
**04.09.2002 Patentblatt 2002/36**

(73) Patentinhaber: **Heidelberger Druckmaschinen Aktiengesellschaft**
**69115 Heidelberg (DE)**

**Beschreibung**

Die Erfindung bezieht sich auf das Gebiet der elektronischen Reproduktionstechnik und betrifft ein Verfahren zur Bestimmung eines Farbprofils für das Drukken mit mehr als drei bunten Druckfarben, allgemein für das Drucken mit N Druckfarben.

In der Reproduktionstechnik werden Druckvorlagen für Druckseiten erzeugt, die alle zu druckenden Elemente wie Texte, Grafiken und Bilder enthalten. Für den farbigen Druck wird für jede Druckfarbe eine separate Druckvorlage erzeugt, die alle Elemente enthält, die in der jeweiligen Farbe gedruckt werden. Für den standardmäßigen Vierfarbdruck sind das die Druckfarben Cyan, Magenta, Gelb und Schwarz (CMYK). Die nach Druckfarben separierten Druckvorlagen werden auch Farbauszüge genannt. Die Druckvorlagen werden in der Regel gerastert und auf Filme belichtet, die dann zur Herstellung von Druckformen für das Drucken hoher Auflagen (Druckplatten, Druckzylinder) weiter verarbeitet werden. Alternativ können die Druckvorlagen in speziellen Recordern direkt auf Druckplatten belichtet werden. Es gibt auch digitale Druckmaschinen, die die Druckvorlagendaten ohne den Zwischenschritt der Herstellung von Farbauszugsfilmen oder Druckplatten direkt verarbeiten und in Druckprodukte umsetzen.

Die Druckvorlagen einer zu reproduzierenden Druckseite beschreiben die Seite in Form von Druckdaten, die im Fall des Vierfarbdrucks die zu druckenden prozentualen Anteile der Druckfarben CMYK in jedem Bildpunkt durch vier Druckfarbwerte angeben. Beispielsweise wird jeder Druckfarbwert durch ein Byte beschrieben, d.h. er kann in 256 Stufen zwischen 0% und 100% variiert werden. Der Druckfarbwert 0% bedeutet, dass die Druckfarbe an der entsprechenden Stelle der Druckseite nicht gedruckt wird, und der Druckfarbwert 100% bedeutet, dass die Druckfarbe mit ihrem Volltonwert, d.h. dem maximal möglichen Anteil gedruckt wird.

Zur Bestimmung der Druckfarbwerte beispielsweise für ein zu druckendes Bild wird das Bild in einem Scanner Zeile für Zeile und Bildpunkt für Bildpunkt mit Licht abgetastet, wobei für jeden Bildpunkt zunächst Scannerfarbwerte für die Primärfarben Rot, Grün und Blau (RGB) erzeugt werden. Die Scannerfarbwerte können in einem Farbrechner direkt in die Druckfarbwerte CMYK umgesetzt werden. Heute werden die Scannerfarbwerte jedoch häufig in einem Zwischenschritt zunächst in geräteunabhängige Farbwerte, z.B. in die Farbwerte des Lab-Farbsystems, umgerechnet. Das Lab-Farbsystem wurde von der CIE (Commission Internationale d'Éclairage) standardisiert, und es beschreibt die Farben so, wie ein menschlicher Normalbeobachter sie sieht. Der Zwischenschritt wird gemacht, um die Farben von den geräteabhängigen Farbsystemen von Scannern, Farbmonitoren, Farbdruckern, Druckmaschinen usw. zu entkoppeln und die zu druckenden Farben in einem geräteunabhängigen Farbsystem zu beschreiben und zu bearbeiten. In einem zweiten Schritt werden dann die in der Regel noch farbkorrigierten und retuschierten Lab-Farbwerte in die Druckfarbwerte CMYK umgesetzt.

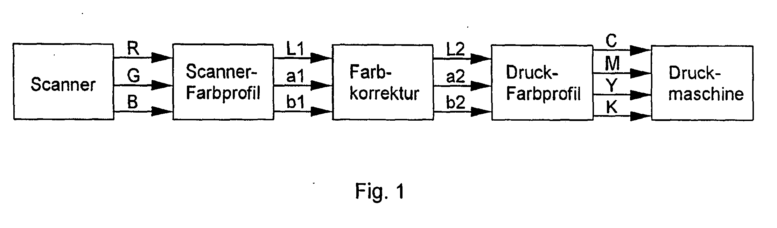

Fig. 1 zeigt die Farbumsetzungen von den Scannerfarbwerten RGB über die unkorrigierten Farbwerte Lab1 und die korrigierten Farbwerte Lab2 in die Druckfarbwerte CMYK nach dem heutigen Arbeitsablauf. Der Zusammenhang zwischen den jeweiligen Gerätefarbwerten und den ihnen entsprechenden Lab-Farbwerten wird vorzugsweise durch ein Farbprofil repräsentiert. Das Scannerfarbprofil beschreibt demnach, welche Lab-Farbe jeder möglichen Kombination der RGB-Farbwerte des Scanners zugeordnet ist, und das Druckfarbprofil gibt für jede Lab-Farbe die zugeordneten CMYK-Farbwerte an, die gedruckt werden müssen, um die Lab-Farbe im Druckprodukt zu erhalten. Die Farbprofile sind im allgemeinen mehrdimensionale Umsetztabellen, die zumindest für eine Untermenge der möglichen Lab-Farbwerte die zugeordneten geräteabhängigen Farbwerte enthalten. Für dazwischen liegende Farbwerte wird dann eine Interpolation durchgeführt. Das Datenformat der Farbpronic ist vom International Color Consortium (ICC) standardisiert worden. Die Entkoppelung über das Lab-Farbsystem ermöglicht auch, beliebige Geräte wie verschiedene Scanner oder andere Bildquellen oder verschiedene Druckverfahren in einem Arbeitsablauf zu kombinieren und flexibel zu wechseln, ohne dass infolge der vielen unterschiedlichen geräteabhängigen Farbsysteme die Übersicht verloren geht, welche Farbe am Ende des Prozesses herauskommen wird. Die Kontrolle der Farbe über verschiedene Geräte in einem komplexen Arbeitsablauf wird als Color Management bezeichnet.

Beim traditionellen Vierfarbdruck mit den Standardfarben CMYK ist der Umfang der zur Verfügung stehenden druckbaren Farben gegenüber den wahrnehmbaren Farben in Dias oder den Farben auf einem Monitor in einigen Bereichen deutlich eingeschränkt. Diese Einschränkungen können zwar reduziert werden, wenn man statt der bunten Standard-Druckfarben Cyan, Magenta, und Gelb Sonderfarben für Cyan, Magenta, und Gelb verwendet, die noch bunter sind. Eine umfassende Lösung erfordert jedoch das Drucken mit mehr als drei bunten Druckfarben.

Im einfachsten Fall kann man etwa zu den Standardfarben CMYK eine weitere bunte Druckfarbe wie Rot oder Grün hinzunehmen, um den Umfang der druckbaren Farben in einem bestimmten Bereich auszuweiten. Dieser Fall kommt im Verpackungsdruck vor, wenn spezielle kräftige Produkt- bzw. Logo-Farben wiedergegeben werden müssen. Selbst wenn ein solcher spezieller Farbton mit den Standard-Druckfarben erzeugt werden kann, bringt eine entsprechende Sonderfarbe eine erhöhte Stabilität gegenüber den Schwankungen im Druckprozess von zwei übereinander gedruckten Standard-Druckfarben. Wenn in mehreren Bunttonbereichen der Farbumfang der gedruckten Farben erweitert werden soll, kann beispielsweise mit sieben Farben gedruckt werden, mit den Standardfarben CMYK und drei weiteren bunten Druckfarben Rot, Grün und Blau.

In der US-Patentschrift US 5,563,724 wird vorgeschlagen, für z. B. 7 unterschiedliche Druckfarben immer Testfelder mit jeweils vier unterschiedlichen Druckfarben zu drucken, wodurch immer Unterfarbräume des Farbraumes mit 7 Druckfarben in einem geräteunabhängigen Farbraum abgebildet werden. Auf diese Weise werden 6 Unterfarbräume gebildet, die sich jeweils alternierend in einer Druckfarbe voneinander unterscheiden. Die einzelnen Unterfarbräume überschneiden sich daher entsprechend. Eine gewünschte Farbe aus dem geräteunabhängigen Farbraum wird dann durch das Übereinanderdrucken von höchstens 4 Druckfarben imm folgenden Druckprozess erzeugt. Aufgrund von Randbedingungen kann von den sich überlappenden Unterfarbräumen einer ausgewählt werden, aus deren Druckfarben die gewünschte Farbe erzeugt wird.

Aus der europäischen Patentanmeldung EP 0 563 498 A1 ist ein Mehrfarbendruckverfahren für textile Substrate insbesondere mittels Siebdruck bekannt. Obwohl zum Bedrucken von textilen Substraten nach Möglichkeit keine Druckfarben übereinander gedruckt werden sollen, wird hier ein Verfahren beschrieben, in dem zum Erreichen von nicht zur Verfügung stehenden Farben mehrere Farben übereinander gedruckt werden. Zum Ermitteln des Farbeindrucks werden dann Farbfelder auf einem textilen Substrat erzeugt, wofür jeweils maximal drei Druckfarben für alle Farbfelder einer Farbtafel übereinaner gedruckt werden. Die drei Druckfarben werden dafür so ausgewählt, dass die durch sie gebildeten Unterfarbräume sich nicht überlappen. Durch diese begrenzte Auswahl von Druckfarben eines Unterdruckraumes kann eine eindeutige Zuordnung von gewünschten Farben zu Druckfarbenkombinationen hergestellt werden.

Ebenso ist aus dem US-Patent 4,878,977 ein Verfahren zur Erstellung von Farbtafeln bekannt, bei dem der Farbraum von sieben Druckfarben in einem geräteunabhängigen Farbraum abgebildet wird und hier eine eindeutige Zurodnung erreicht wird, indem immer drei Farben aus dem Bereich der Druckfarben übereinandergedruckt wird. Auch diese Unterfarbräume werden sich überlappen.

In der deutsche Patentschrift DE-4417449-C2 wird ein einfaches Verfahren zur Erzeugung des Farbauszugs für eine zusätzliche Druckfarbe beschrieben, wobei der Sekundärfarbton der Zusatzfarbe in den Standard-Druckfarben weggelassen wird, indem aus den beteiligten Standard-Druckfarben ein entsprechender Betrag subtrahiert wird. In der europäischen Patentschrift EP-0131145-B1 wird ein Verfahren beschrieben, das mit sieben oder acht Druckfarben arbeitet und bei dem die druckenden Flächenelemente nebeneinander gedruckt werden. Dabei werden an jeder Bildstelle bis zu vier Druckfarben gedruckt, Flächenelemente der Druckfarben Weiss und Schwarz einerseits und Flächenelemente von zwei im Buntton benachbarten bunten Druckfarben andererseits. Die Druckfarbwerte werden aus den gescannten RGB-Farbwerten durch schrittweises Subtrahieren von Anteilen gewonnen, die mehreren RGB-Farbwerten gemeinsam sind. In der europäischen Patentanmeldung EP-0735743-A2 wird ein Verfahren beschrieben, das die Farbauszüge für sieben Druckfarben aus den gescannten RGB-Farbwerten durch einfache Operationen wie Addition, Subtraktion, Minimum- und Maximum-Funktion berechnet, wobei die Rechenwerte mit einfachen eindimensionalen Tabellenfunktionen bezüglich der Druckprozess-Eigenschaften korrigiert werden. In der europäischen Patentanmeldung EP-0586139-A2 wird ein Verfahren zur Bestimmung der Farbauszüge für sieben Druckfarben beschrieben, bei dem zwei dreidimensionale Umsetztabellen berechnet werden, eine Tabelle, die die gescannten RGB-Farbwerte in die vier Standard-Druckfarben CMYK umsetzt und eine weitere Tabelle, die die gescannten RGB-Farbwerte in die zusätzlichen Druckfarben Rot, Grün, Blau umsetzt. Alle bekannten Verfahren beschränken sich auf die Farbseparation in sieben Druckfarben, wobei die sechs bunten Druckfarben im wesentlichen die Standard-Druckfarben Cyan, Magenta, Gelb einerseits und ihre Komplementärfarben Rot, Grün, Blau andererseits sind, d.h. die Bunttonwinkel der bunten Druckfarben sind gleichmäßig auf dem Farbkreis verteilt. Die bekannten Verfahren haben zum Teil auch keine ausreichend genaue Farbwiedergabe, besonders die Verfahren nicht, bei denen die Farbwiedergabecharakteristik des zu verwendenden Druckprozesses und der Druckmaschine nicht in die Berechnungen einfließen.

Es ist daher die Aufgabe der vorliegenden Erfindung, ein neues Verfahren anzugeben, mit dem ein Druckfarbprofil mit hoher Wiedergabequalität für ein System von N Druckfarben bestimmt werden kann. Dabei ist die Wahl der bunten Druckfarben bezüglich ihres Bunttonwinkels und ihre Anzahl innerhalb weiter Grenzen beliebig. Das Verfahren kann sowohl für Druckfarbensysteme angewendet werden, die die Druckfarbe Schwarz enthalten, als auch für Druckfarbensysteme mit nur bunten Druckfarben.Diese Aufgabe wird durch die Merkmale des Anspruchs 1 gelöst. Vorteilhafte Weiterbildungen sind in den Unteransprüchen angegeben.

Die Erfindung wird nachfolgend anhand der Figuren 1 bis 15 näher beschrieben.

Es zeigen;

**Fig. 1** den Arbeitsablauf bei der Erzeugung von Druckdaten aus gescannten Bilddaten mithilfe von Farbprofilen (Stand der Technik),

**Fig. 2** die innere Bezugskurve im Lab-Farbsystem,

**Fig. 3** eine Grenzfläche im Lab-Farbsystem,

**Fig. 4** eine Testform zur Bestimmung einer Grenzfläche,

**Fig. 5** die Grenzflächen für ein Druckfarbensystem mit vier Standard-Druckfarben im Lab-Farbsystem,

Fig. 6 die Grenzflächen und Farbsektoren für ein Druckfarbensystem mit vier Standard-Druckfarben im Lab-Farbsystem in einer Ansicht auf die a,b-Ebene,

Fig. 7 die Grenzflächen und Farbsektoren für ein Druckfarbensystem mit sieben Druckfarben im Lab-Farbsystem in einer Ansicht auf die a,b-Ebene,

Fig. 8 die Grenzflächen und Farbsektoren für ein Druckfarbensystem mit fünf Sonderfarben im Lab-Farbsystem in einer Ansicht auf die a,b-Ebene,

Fig. 9 eine Testform zur Bestimmung eines Farbsektors,

Fig. 10 einen Schwarzaufbau mit den Druckfarben CMYK,

Fig. 11 eine nach dem Schwarzaufbau modifizierte Testform zur Bestimmung einer Grenzfläche,

Fig. 12 eine Gewichtsfunktion für die Druckfarbenanteile in einer Testform zur Bestimmung einer Grenzfläche,

Fig. 13 zwei Orange-Druckfarben im Lab-Farbsystem in einer Ansicht auf die a,b-Ebene,

Fig. 14 zwei Orange-Druckfarben im Lab-Farbsystem in einer Ansicht auf die L,Chroma-Ebene, und

Fig. 15 eine modifizierte Testform zur Bestimmung einer Grenzfläche für zwei Orange-Druckfarben.

Das erfindungsgemäße Verfahren ermöglicht die Berechnung spezieller Druckfarbprofile für die Umsetzung von geräteunabhängigen Farben (Lab) in die Druckfarbwerte eines Druckfarbensystems mit N Druckfarben, die entsprechend der ICC-Spezifikation (International Color Consortium) als Link-Profile bezeichnet werden. Die Berechnung der inversen Umsetzung von den Druckfarbwerten in die geräteunabhängigen Lab-Farbwerte ist mithilfe bekannter einfacher Verfahren leicht möglich, wodurch die Druckfarbprofile zu den umfangreicheren Geräte-Profilen ergänzt werden. Wie herkömmliche Druckfarbprofile können die nach der Erfindung bestimmten Farbprofile mit einer Methode zur Farbumfangs-Anpassung (gamut mapping) kombiniert werden, um zu berücksichtigen, dass bestimmte z.B. in einem Diapositiv enthaltene Farben auch mit einem erweiterten Druckfarbensystem aus N Druckfarben nicht gedruckt werden können. Eine solche Methode ist z.B. in der Patentschrift DE 44 09 226 beschrieben.

Für einen typischen menschlichen Betrachter eines Druckerzeugnisses ist die Wahrnehmung von Farbe durch einen dreidimensionalen Farbraum gekennzeichnet. Deshalb sind standardisierte geräteunabhängige Farbsysteme wie das XYZ- oder das Lab-Farbsystem ebenfalls dreidimensional. Wenn mehr als drei Druckfarben verwendet werden, sind die Druckfarben-Anteile, die man zur Erzeugung einer bestimmten Farbe braucht, nicht eindeutig festgelegt. Im Allgemeinen gibt es mehrere Kombinationen von Druckfarbwerten, die dieselbe Farbe erzeugen. Um die Zuordnung von geräteunabhängig vorgegebenen Lab-Farben zu den entsprechenden Druckfarbwerten trotzdem in eindeutiger Weise festzulegen, müssen zusätzliche einschränkende Randbedingungen beachtet werden, die sich aus den technischen Besonderheiten des Druckprozesses ergeben.

Eine dieser Bedingungen ist, dass der Gesamt-Farbauftrag von übereinander gedruckten Druckfarben (Flächendeckungs-Summe) begrenzt werden muss, z.B. auf 340 % im Offsetdruck. Gründe dafür sind u.a. die notwendigen Trocknungszeiten und die begrenzte Farbannahme der Papieroberfläche. Obwohl also beim Siebenfarben-Druck ein Gesamt-Farbauftrag von bis zu 700 % theoretisch möglich wäre, dürfen die Bereiche des 7-dimensionalen Druckfarbenraumes, wo die Summe der Farbanteile oberhalb der vorgegebenen Grenze liegen, nicht benutzt werden. Allerdings können Farben mit einem sehr hohen Gesamt-Farbauftrag auch nicht stabil, d.h. mit hoher Wiederholgenauigkeit, gedruckt werden.

Wenn die Druckfarbe Schwarz verwendet wird und dieses Schwarz nicht farbstichig ist, ist es möglich, alle unbunten (grauen) Bereiche von Bildern ganz ohne bunte Druckfarben zu drucken. Dies führt bei Verwendung von feinen Rastern zu guten Ergebnissen, bei gröberen Rastern wird allerdings die Rasterstruktur in diesen Bereichen deutlich sichtbar. Außerdem ist oft die allein mit Schwarz erreichbare optische Dichte nicht ausreichend. Andererseits kann durch den Einsatz von Schwarz die eingesetzte Menge bunter Druckfarben reduziert und der Druckprozess stabilisiert werden. Deshalb ist es erforderlich, unterschiedliche Farbaufbau-Varianten wählen zu können, so dass je nach den Randbedingungen der innere Bereich der unbunten Farben mit mehr oder weniger Schwarz aufgebaut wird.

Bei Verwendung konventioneller Raster steht nur eine begrenzte Zahl von Rasterwinkeln zur Verfügung, wenn Moirébildung vermieden werden soll, normalerweise vier verschiedene Winkel. Deshalb müssen oft mehrere Druckfarben denselben Rasterwinkel benutzen. Da das Übereinanderdrucken von mehreren Farben unter demselben Rasterwinkel in vielen Fällen zu schlecht reproduzierbaren Druckergebnissen führt, darf dieser Fall allenfalls bei kleinen Rasterpunkten auftreten.

Die genannten Anforderungen werden von dem erfindungsgemäßen Verfahren berücksichtigt, indem entsprechende zusätzlich einschränkende Bedingungen für die Farbseparation festgelegt werden. Ein wesentliches Merkmal des Verfahrens ist eine spezielle Zerlegung des gesamten Farbkörpers der druckbaren Farben in Teilkörper, die jeweils gesondert behandelt werden können. Den Teilkörpern entsprechen dabei jeweils spezielle Unterräume des gesamten N-dimensionalen Druckfarbenraumes. Grundlage für diese Zerlegung ist die Ermittlung von Prozesseigenschaften in ausgewählten Bereichen des Druckprozesses. Dies geschieht zunächst mit einem ersten Satz von Testformen und danach mit einem zweiten Satz von Testformen, die mit dem zu bestimmenden Druckprozess gedruckt werden und dann farbmetrisch ausgemessen werden. Die Methode der Zerlegung und der sich daraus ergebende Aufbau von Testformen wird zuerst für Druckprozesse mit der Druckfarbe Schwarz beschrieben.

Wenn die Druckfarbe Schwarz mit unterschiedlichen Prozentwerten zwischen 0% und 100% gedruckt wird, ergibt sich aus den entsprechenden Farbmesswerten im Lab-Farbsystem eine Kurve, die vom Papierweiß bis zum reinen Schwarz verläuft.

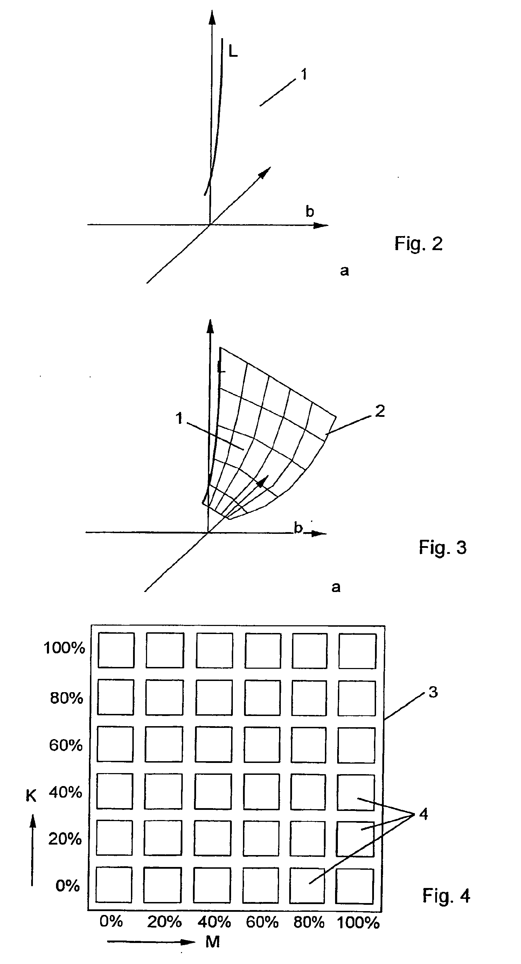

Diese Kurve wird im Folgenden als innere Bezugskurve 1 bezeichnet. Sie ist beispielhaft in Fig. 2 gezeigt. Die innere Bezugskurve 1 liegt bei den meisten Druckprozessen im Innern des gesamten Prozess-Farbkörpers, im Allgemeinen liegt sie aber nicht auf der Grauachse, d.h. auf der L-Achse des Lab-Farbsystems. Eine besonders einfache Zerlegung des Farbkörpers erreicht man, wenn man vorschreibt, dass auf allen Punkten der inneren Bezugskurve 1 keine bunten Druckfarben verwendet werden sollen. Dieser Fall wird zunächst erläutert. Der allgemeinere und für viele praktische Druckprozesse vorteilhaftere Fall, dass unbunte Farben durch den Übereinanderdruck von Schwarz und einigen bunten Druckfarben gebildet werden, wird später aus diesem speziellen Fall abgeleitet.

Die verschiedenen Kombinationen aus Schwarz und einer einzelnen bunten Druckfarbe bilden eine zweidimensionale Punktmenge, die im Lab-Farbsystem als Grenzfläche im Prozess-Farbkörper von der Form eines stark verzerrten Quadrats abgebildet wird. In Fig. 3 ist beispielhaft für die Druckfarbe Magenta die entsprechende Grenzfläche 2 eingezeichnet. Sie ist auf einer Seite durch die innere Bezugskurve 1 begrenzt. Um die Lage und Form der Grenzfläche 2 im Lab-Farbsystem zahlenmäßig zu erfassen, wird eine Testform mit Kombinationen einiger diskreter Werte der Druckfarben Schwarz und Magenta gedruckt und dann farbmetrisch ausgemessen.

Eine solche Testform 3 ist in Fig. 4 gezeigt. Sie besteht aus Farbfeldern 4, deren Druckfarbwerte für Schwarz und Magenta systematisch variiert werden. In dem Beispiel von Fig. 4 nehmen in den Farbfeldern 4 die Anteile von Magenta von links nach rechts zu, und die Anteile von Schwarz nehmen von unten nach oben zu. Mit den Farbmesswerten der Felder 4 der Testform 3 erhält man zu den Druckfarben-Kombinationen die entsprechenden Punkte im Lab-Farbsystem. Durch zweidimensionale Interpolation zwischen den Druckfarbwerten der Farbfelder 4 bzw. zwischen den dazu gemessenen Punkten im Lab-Farbsystem kann man dann mit hinreichender Genauigkeit den zweidimensionalen Teilprozess aus Schwarz und der bunten Druckfarbe beschreiben. Für praktische Zwecke hat sich eine Stufenweite von 10% zwischen 0 und 100% als hinreichend genau erwiesen. Auch eine Stufung mit 0, 10, 20, 40, 70 und 100% eignet sich für diesen Zweck.

Für alle vorgesehenen bunten Druckfarben werden entsprechende zweifarbige Testformen 3 mit Farbfeldern 4, in denen die jeweilige bunte Druckfarbe mit der Druckfarbe Schwarz kombiniert werden, nach dem beschriebenen Schema erzeugt. Außerdem werden in einer weiteren Testform Farbfelder zusammengefasst, die alle möglichen Farbkombinationen aus jeweils zwei bunten Volltonfarben enthalten. Bei N-1 bunten Druckfarben ergeben sich (N - 1) $\times$ (N - 2) / 2 Felder für diese letzte Testform.

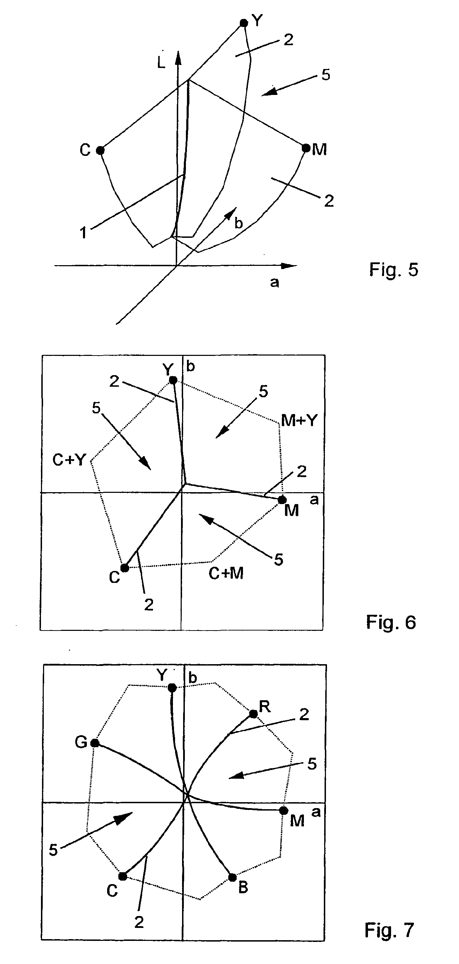

Der ganze Satz von N Testformen wird dann vorzugsweise gleichzeitig auf einem Druckbogen gedruckt, und alle Testfelder werden farbmetrisch vermessen. Die ersten N - 1 Testformen ergeben die Beschreibungen für die zweidimensionalen Teilprozesse zwischen jeweils einer bunten Druckfarbe und Schwarz. Daraus ergibt sich im Lab-Farbsystem eine Menge von Grenzflächen 2, die alle die innere Bezugskurve 1 gemeinsam haben. Zur Veranschaulichung sind in Fig. 5 drei Grenzflächen 2 für die bunten Druckfarben Cyan, Magenta und Gelb skizziert. In dem Beispiel wird der Druckprozess-Farbkörper durch die drei Grenzflächen 2 in drei Farbsektoren 5 geteilt. Auf den Grenzflächen 2 liegen Farben, die aus einer bunten Druckfarbe und Schwarz erzeugt werden. In den Farbsektoren 5 zwischen den Flächen liegen Farben, die aus Schwarz und zwei bunten Druckfarben erzeugt werden. Einem Farbsektor 5 zwischen zwei Grenzflächen 2 im Lab-Farbsystem entspricht ein dreidimensionaler Unterraum des höherdimensionalen Druckprozess-Farbraumes. Die Farbanteile der drei jeweils beteiligten Druckfarben variieren dabei zwischen 0 und 100%.

In der Fig. 6 ist das Beispiel von Fig. 5 noch einmal in einer Ansicht von oben auf die a,b-Ebene gezeigt. Die maximale Ausdehnung des Druckprozess-Farbköpers in der a,b-Ebene wird durch die Volltonfarben CMY und die Vollton-Mischfarben C+Y, M+Y sowie C+M bestimmt. Die Lab-Farbwerte der Vollton-Mischfarben erhält man aus den Meßwerten der Testform, deren Felder die Kombination von jeweils zwei bunten Volltonfarben enthält.

In Fig. 7 ist als weiteres Beispiel ein Siebenfarbensystem mit den 6 bunten Druckfarben Cyan, Magenta, Gelb, Rot, Grün, Blau in der Ansicht von oben auf die a,b-Ebene schematisch gezeigt. Die 12-eckige Umrisslinie entsteht durch die sechs bunten Volltonfarben und die sechs Vollton-Mischfarben zwischen jeweils benachbarten Druckfarben. In diesem Beispiel ergeben sich 6 Farbsektoren 5 zwischen den Grenzflächen 2. In der Fig. 7 ist angedeutet, dass die Grenzflächen 2 zwischen den Farbsektoren 5 des Farbkörpers im Allgemeinen unregelmäßig geformt sind und in der Projektion auf die a,b-Ebene gewöhnlich Kurven oder sogar schmale Flächen ergeben.

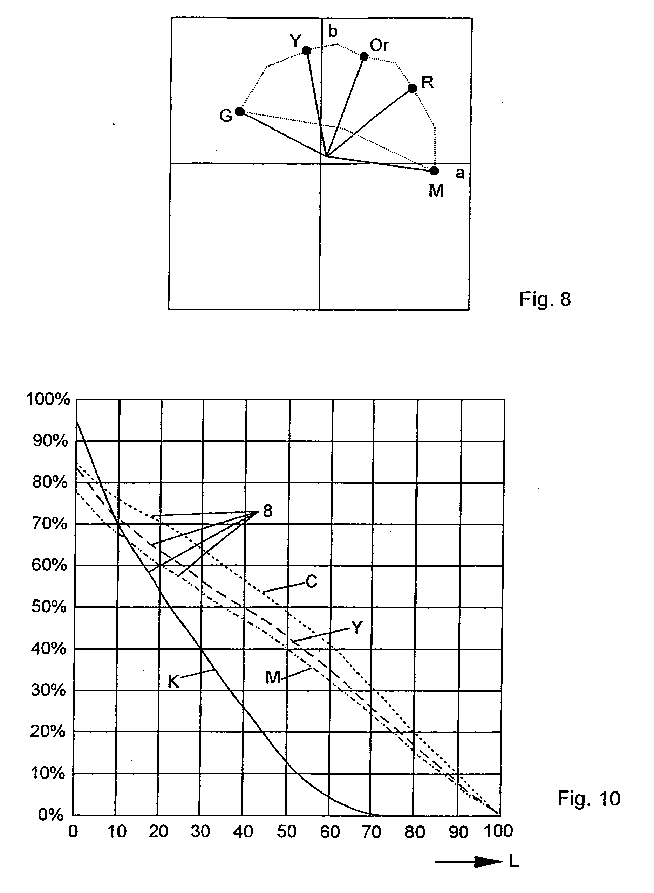

Das Erzeugen, Drucken und Ausmessen des ersten Satzes von Testformen dient dazu, eine Übersicht über die Ausdehnung und Form des Druckprozess-Farbkörpers im Lab-Farbsystem zu erhalten. Außerdem wird damit die Form und Lage der Grenzflächen 2 zwischen den Farbsektoren 5 bestimmt. Nachdem die Farbmesswerte des ersten Satzes von Testformen vorliegen, kann der Anwender beispielsweise anhand von grafischen Darstellungen, die entsprechend den Figuren 5, 6 oder 7 auf einem Computer-Bildschirm mit einer geeigneten Software erzeugt werden, den Druckprozess-Farbkörper in verschiedenen Ansichten beurteilen. Ob die entsprechenden räumlichen Verhältnisse im Lab-Farbsystem akzeptabel sind, hängt stark von den Absichten des Anwenders ab. So kann z.B. ein Druckprozess mit einem Farbkörper wie in Fig. 8, der aus den Druckfarben Grün, Gelb, Orange, Rot und Magenta besteht und nur einen Teilbereich der wahrnehmbaren Farben enthält, durchaus geeignet sein für den Verpackungsdruck mit Bildern und Produktfarben, in denen nur bestimmte Farbbereiche vorkommen. Für die übliche Reproduktionstechnik mit beliebigen Bildern wäre ein solcher Farbkörper dagegen völlig ungeeignet.

Weitere Überprüfungen werden vorzugsweise rechnerisch mit geeigneter Software durchgeführt. So wird z.B. geprüft, ob die bunten Druckfarben im Lab-Farbsystem einen Mindestabstand voneinander haben und alle auf der äußeren Hülle des Farbkörpers liegen. Dies wird gefordert, weil vermieden werden soll, dass eine bunte Druckfarbe dieselben Farbwerte hat wie eine weit im Innern des Farbkörpers liegende Kombination der anderen Druckfarben. Dazu wird aus den Messwerten der ersten N - 1 Testformen des ersten Satzes von Testformen eine konvexe Hülle im Lab-Farbsystem berechnet. Geeignete Verfahren dazu sind in der Literatur über Computergrafik beschrieben.

Die bunten Druckfarben werden mithilfe der vorher berechneten konvexen Hülle in der a,b-Ebene in umlaufender Reihenfolge geordnet. Damit wird entschieden, welche Druckfarbe jeweils zu welchen anderen benachbart ist. Damit hat man auch insgesamt eine Zerlegung des Druckprozess-Farbkörpers in einzelne Farbsektoren 5 erreicht, und man hat gleichzeitig die in jedem Farbsektor 5 zu verwendenden Druckfarben festgelegt. Jeder Farbsektor 5 des Druckprozess-Farbkörpers kann in dem bisher betrachteten einfachsten Fall, wo nur die Druckfarbe Schwarz für unbunte Farben verwendet wird, aus drei Druckfarben erzeugt werden, nämlich aus Schwarz und den bunten Druckfarben der beiden Grenzflächen 2, die den Farbsektor 5 auf jeder Seite begrenzen. Jeder Farbsektor 5 entspricht jeweils einem dreidimensionalen Unterraum des gesamten N-dimensionalen Druckprozess-Farbraumes. Durch Variation der drei Druckfarben-Anteile zwischen 0 und 100% werden alle Punkte eines Farbsektors erreicht.

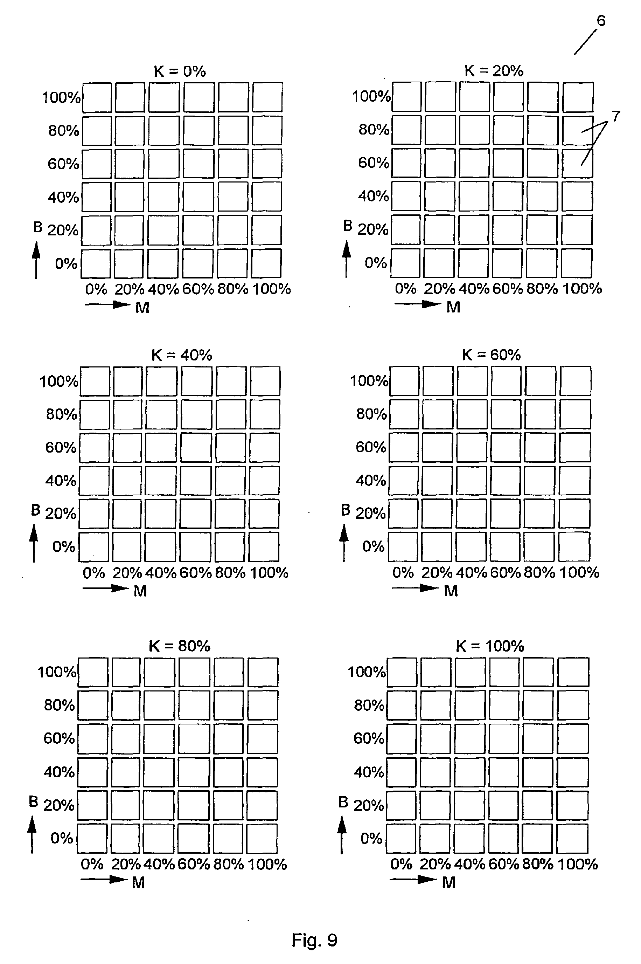

Im nächsten Schritt des erfindungsgemäßen Verfahrens wird ein zweiter Satz von Testformen erzeugt, wobei für jeden Farbsektor 5 eine Testform gebildet wird, deren Farbfelder Kombinationen der drei in dem Farbsektor beteiligten Druckfarben enthalten. Fig. 9 zeigt als Beispiel eine Testform 6 für einen Farbsektor 5 mit den drei Druckfarben Schwarz, Magenta und Blau. Die Testform 6 enthält mehrere Gruppen von Farbfeldern 7. In jeder Gruppe werden die Druckfarben Magenta und Blau in Stufen variiert, und die Druckfarbe Schwarz hat einen konstanten Druckfarbwert. Von Gruppe zu Gruppe wird die Druckfarbe Schwarz variiert. Der zweite Satz von Testformen 6 wird ebenfalls mit dem zu bestimmenden Druckprozess gedruckt, und die Farbfelder 7 werden farbmetrisch ausgemessen.

Aus den Messwerten wird schließlich das Druckfarbprofil berechnet. Das Farbprofil ist im Wesentlichen eine auf der Eingangsseite dreidimensionale Tabelle, die für alle Kombinationen von diskreten, regelmäßig gestuften Lab-Farbwerten die zugehörigen Druckfarbwerte enthält. Bei der Anwendung des Farbprofils gemäß Fig.1 können dann alle Zwischenwerte durch Interpolation zwischen den Tabellen-Stützpunkten gewonnen werden. Das Erstellen der Tabelle erfordert, dass für jede Tabellenposition, d.h. für jeden Stützpunkt im Lab-Farbsystem das entsprechende N-Tupel für die zugehörigen N Druckfarbwerte eingetragen wird.

Die Testformen 6 aus dem zweiten Satz von Testformen sind die Abbilder von dreidimensionalen Gittern in Unterräumen des Druckprozess-Farbraumes. Aus praktischen Gründen haben sie üblicherweise eine Auflösung zwischen $5 \times 5 \times 5$ und $11 \times 11 \times 11$ Gitterpunkten. Die Gitterposition eines Punktes bestimmt dabei seine Druckfarben-Anteile in dem jeweiligen Unterraum, und die Koordinaten des Punktes sind die zugehörigen Messwerte im Lab-Farbsystem. Durch eine geeignete Interpolationsmethode, z.B. mit Spline-Funktionen, werden Gitter mit kleineren Abständen zwischen den Punkten erzeugt. Ein geeignetes Gitter hat z.B. $32 \times 32 \times 32$ Punkte.

Für jeden zu bearbeitenden Stützpunkt im Lab-Farbsystem, d.h. für jede Tabellenposition des zu bestimmenden Druckfarbprofils werden dann die euklidischen Abstände zu allen Gitterpunkten in allen hochinterpolierten Testform-Gittern berechnet. Der Gitterpunkt mit dem kleinsten Abstand wird ausgewählt. Wegen der begrenzten Auflösung der Testform-Gitter ist es zweckmäßig, in der Umgebung dieses Gitterpunktes aus seinen Nachbarpunkten ein lokales, feiner aufgelöstes Gitter mit einem Abstand der Gitterpunkte im Druckprozess-Unterraum von beispielsweise 0.5 % zu interpolieren. In diesem feineren lokalen Gitter werden wieder alle euklidischen Abstände zu dem Lab-Farbwert des Tabellen-Stützpunktes berechnet und der Punkt mit dem kleinsten Abstand wird ausgewählt.

Für den ermittelten Punkt wird ein N-Tupel gebildet, in das die drei zugeordneten Druckfarbwerte in dem entsprechenden Farbsektor eingetragen werden und die nicht zu dem Farbsektor gehörenden Druckfarben Null gesetzt werden. Das N-Tupel wird dann in die gerade bearbeitete Tabellenposition des Druckfarbprofils eingetragen. Wenn die N-Tupel für alle Lab-Stützpunkte des Druckfarbprofils eingetragen sind, ist das Verfahren abgeschlossen.

Bisher wurde der einfache Fall beschrieben, dass auf allen Punkten der inneren Bezugskurve 1 nur die Druckfarbe Schwarz verwendet wird. Üblicherweise werden in der Drucktechnik jedoch unbunte Farben durch den Übereinanderdruck von Schwarz und einigen bunten Druckfarben gebildet, da dadurch die unbunten Farben dunkler wiedergegeben werden und ein glatterer Übergang von unbunten zu bunten Farben erreicht wird. Für diesen Fall wird das erfindungsgemäße Verfahren entsprechend modifiziert, indem für die Farben auf der inneren Bezugskurve 1 nicht allein die Druckfarbe Schwarz festgelegt wird sondern eine Kombination der Standard-Druckfarben CMYK. Die relativen Anteile dieser Standard-Druckfarben, mit denen sie zum Aufbau der unbunten Farben beitragen, werden zweckmäßigerweise so gewählt, wie sie aufgrund der Erfahrungen mit dem klassischen Vierfarbdruck sinnvoll sind und zu guten Ergebnissen führen.

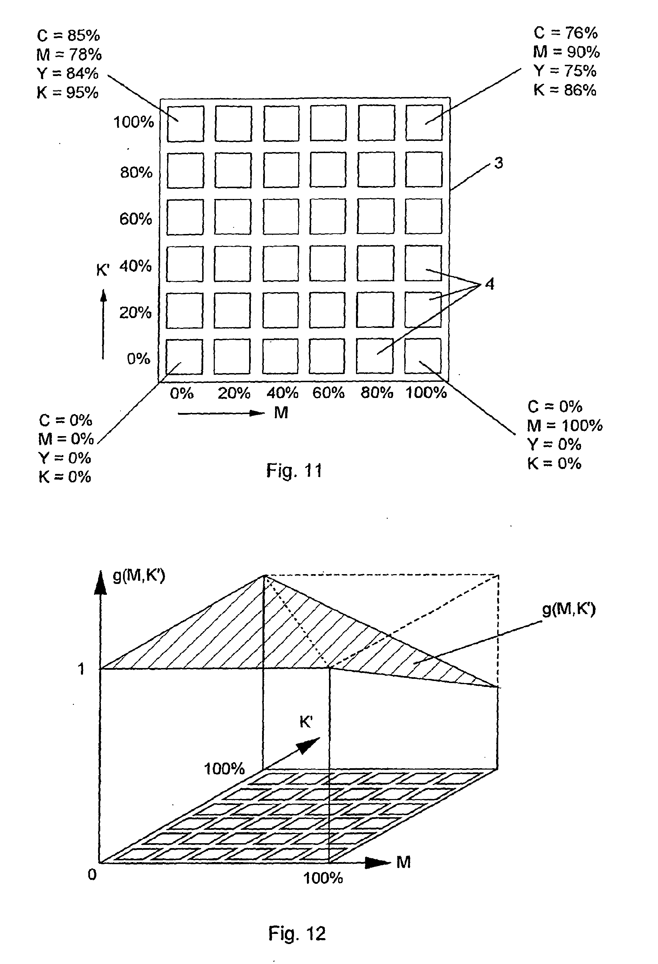

Fig. 10 zeigt ein Beispiel für die relativen Anteile von CMYK in unbunten Farben, wobei die Anteile als Funktionen 8 in Abhängigkeit von der Helligkeit L aufgetragen sind. Diese Zusammensetzung wird auch mit dem Fachbegriff "Schwarzaufbau" bezeichnet. Für die Farbe Weiss (L = 100) sind alle Anteile von CMYK gleich Null. Ein Grauwert von L = 50 setzt sich aus den Anteilen C = 48%, M = 40%, Y = 42%, K = 12% zusammen. Die Farbe Schwarz (L = 0) hat schließlich die Anteile C = 85%, M = 78%, Y = 84%, K = 95%. Typisch für einen solchen Schwarzaufbau ist auch, dass helle Grauwerte überhaupt keinen Anteil der Druckfarbe Schwarz enthalten.

Fig. 11 zeigt eine für einen solchen Schwarzaufbau modifizierte Testform 3 zur Bestimmung der Grenzfläche 2 für die Buntfarbe Magenta. Anstelle der Druckfarbe K = Schwarz aus Fig. 4 wird in den Farbfeldern 4 in vertikaler Richtung eine formale Druckfarbe K' als Kombination von CMYK variiert. Die Zusammensetzung der Farbfelder 4 in der ersten Spalte entspricht dabei dem Schwarzaufbau nach den Funktionen 8 in Fig. 10. Das heißt, das linke untere Farbfeld hat die Zusammensetzung C = 0%, M = 0%, Y = 0%, K = 0% und das linke obere Farbfeld die Zusammensetzung C = 85%, M = 78%, Y = 84%, K = 95%. In der untersten Reihe wird nur die bunte Druckfarbe Magenta variiert, d.h. das rechte untere Farbfeld hat die Zusammensetzung C = 0%, M = 100%, Y = 0%, K = 0%. In den übrigen Farbfeldern 4 werden jedoch nicht einfach die Anteile aus den entsprechenden Farbfeldern der linken Spalte und der untersten Reihe überlagert, da sich dann für das obere rechte Farbfeld eine zu hohe Flächendeckungs-Summe ergäbe. Um die Flächendeckungs-Summe für alle Farbfelder der Testform auf einen vernünftigen Wert zu begrenzen, beispielsweise 340% werden die Anteile mit einer nach rechts und nach oben abfallenden Gewichtsfunktion g (M, K') bewertet. Eine solche Gewichtsfunktion ist qualitativ in Fig. 12 veranschaulicht. Der genaue Verlauf der Gewichtsfunktion g(M, K') ist nicht wesentlich, sie muss nur zur oberen rechten Ecke der Testform 3 hin abfallen. Ohne die Gewichtung ergäbe sich für das Farbfeld rechts oben die Zusammensetzung C = 85%, M = 100%, Y = 84%, K = 95% mit der Flächendeckungs-Summe 364%. Mit dem Gewichtsfaktor von beispielsweise g(M, K') = 0,9 ergibt sich für das Farbfeld rechts oben die Zusammensetzung C = 76%, M = 90%, Y = 75%, K = 86% mit der Flächendeckungs-Summe 327%.

Anstelle des herkömmlichen Schwarzaufbaus auf der inneren Bezugskurve 1 kann auch eine beliebig andere Kombination von einigen der N Druckfarben gewählt werden, z.B. ein Schwarzaufbau ohne die Druckfarbe Schwarz und nur mit den Druckfarben Cyan, Magenta und Gelb. Es ist für das erfindungsgemäße Verfahren auch nicht erforderlich, dass die von der gewählten Druckfarben-Kombination gebildete innere Bezugskurve 1 überhaupt nur unbunte Farben repräsentiert und dicht an der L-Achse des Lab-Farbsystems verläuft. Eine innere Bezugskurve 1 kann beispielsweise auch mit den Druckfarben Rot, Grün und Magenta definiert werden. Wesentlich ist nur, daß es eine innere Bezugskurve 1 gibt, die allen Farbsektoren 5 gemeinsam ist. Allerdings ist es vorteilhaft, wenn die gewählte Druckfarben-Kombination eine innere Bezugskurve 1 ergibt, die relativ weit im Innern des Druckprozess-Farbkörpers verläuft und nicht zu dicht am Rand.

Auch in dem allgemeineren Fall, dass die Farben auf der inneren Bezugskurve 1 aus einer Kombination von Druckfarben gebildet werden, wird ein zweiter Satz von Testformen 6 erzeugt, wobei für jeden Farbsektor 5 eine Testform 6 gebildet wird, deren Farbfelder 7 Kombinationen der formalen Druckfarbe K' und der beiden bunten Druckfarben F1 und F2 enthalten, die die Grenzflächen 2 des Farbsektors 5 definieren. Da die formale Druckfarbe K' wiederum aus Kombinationen der für die innere Bezugslinie 1 gewählten Druckfarben besteht, sind tatsächlich z.B. sechs Druckfarben an der Bildung einer Testform 6 beteiligt. Trotzdem entspricht jeder Farbsektor 5 jeweils einem dreidimensionalen Unterraum des gesamten N-dimensionalen Druckfarbenraumes, und es gibt eine eindeutige Zuordnung zwischen den formalen Druckfarben und den realen.

Die modifizierteTestform 6 enthält wiederum mehrere Gruppen von Farbfeldern 7 (vgl. Fig. 9). In jeder Gruppe werden die bunten Druckfarben F1 und F2 in Stufen variiert, die die Grenzflächen 2 des Farbsektors 5 definieren, und die formale Druckfarbe K' hat einen konstanten Druckfarbwert. Von Gruppe zu Gruppe wird die formale Druckfarbe K' variiert. Wegen der Beteiligung von mehr als drei realen Druckfarben an der Bildung der Farbfelder 7, besteht aber auch wieder die Gefahr, dass sich in den oberen rechten Ecken der Gruppen mit einem hohen K'-Anteil für die Farbfelder 7 eine zu hohe Flächendeckungs-Summe ergibt. Um die Flächendeckungs-Summe für alle Farbfelder 7 der Testform 6 auf einen vernünftigen Wert zu begrenzen, beispielsweise 340% werden die Anteile analog zur Fig. 12 mit einer dreidimensionalen Gewichtsfunktion g(F1, F2, K') bewertet, die für die höheren Anteile der Druckfarben F1 und F2 und insbesondere für die formale Druckfarbe K' in geeigneter Weise abfällt. Der genaue Verlauf der Gewichtsfunktion g(F1, F2, K') ist wiederum nicht wesentlich. Nach dem Andrucken und Ausmessen der modifizierten Testformen 6 wird dann wie oben beschrieben das Druckfarbprofil in Form der dreidimensionalen Tabelle bestimmt. Beim Interpolieren von Gittern in den Unterräumen des Druckprozess-Farbraumes muss dann nur beachtet werden, dass die Druckfarben-Kombinationen in den Farbfeldern 7 der modifizierten Testformen 6 wegen der Anwendung der Gewichtsfunktion keine gleichmäßige Stufung aufweisen.

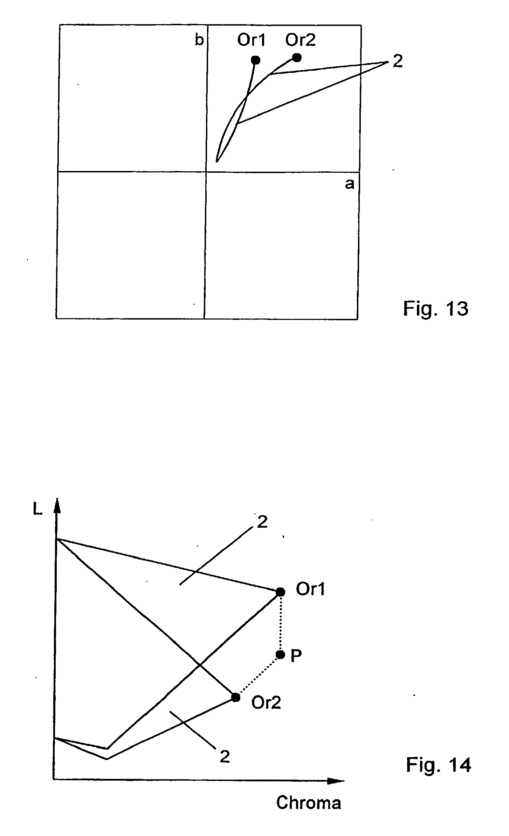

Das erfindungsgemäße Verfahren ermöglicht auch die Bestimmung von geeigneten Druckfarbprofilen für den Sonderfall, dass zwei bunte Druckfarben fast den gleichen Bunttonwinkel haben. Fig. 13 zeigt als Beispiel dafür in einer Ansicht von oben auf die a,b-Ebene die Grenzflächen 2 von zwei verschiedenen Orangefarben Or1 und Or2. Dass es sinnvoll sein kann, mit zwei fast gleichen Druckfarben zu drucken, zeigt die Fig. 14, in der die Grenzflächen 2 der beiden Druckfarben in den Koordinaten Helligkeit (L) und Chroma dargestellt sind (Chroma ist der Abstand zur L-Achse). Vereinfachend wurde hier die innere Bezugskurve als auf der L-Achse liegend angenommen. Es wird deutlich, dass sich die beiden Grenzflächen 2 zu einem großen Teil überlappen, dass es aber auch in jeder Grenzfläche 2 nennenswerte Bereiche gibt, die in der jeweils anderen Grenzfläche 2 nicht enthalten sind. Das bedeutet, dass der erreichbare Farbumfang beschränkt ist, wenn mit nur einer der beiden Orangefarben gedruckt würde.

Die Werte für die Kombination beider Vollton-Farben kann man aus der letzten Testform aus dem ersten Satz von Testformen entnehmen. Der entsprechende Punkt ist in Fig. 14 mit P bezeichnet. Wenn die beiden Orange-Druckfarben und Schwarz (bzw. eine entsprechende Farbkombination für die Farben auf der inneren Bezugskurve) kombiniert werden, kann der gesamten Farbumfang der Fig. 14 mit einer neuen gemeinsamen Grenzfläche 2 abgedeckt werden, die teilweise auf der Grenzfläche für die Druckfarbe Or1, teilweise auf der Grenzfläche für die Druckfarbe Or2 und teilweise zwischen diesen beiden Grenzflächen liegt. Dazu wird eine Testform 3 nach dem Schema aus Fig. 4 erzeugt, in der die Farbfelder 4 aus den drei Druckfarben so zusammengesetzt sind, dass einige Farbfelder 4 nur die Druckfarbe Or1 in Abstufungen enthalten, andere Farbfelder 4 nur die Druckfarbe Or2 in Abstufungen, weitere Farbfelder 4 nur die schwarze Druckfarbe K' in Abstufungen, und die übrigen Farbfelder 4 verschiedene Kombinationen von zwei oder drei dieser Farben. Wenn die waagerechte Achse der Testform 3 mit Fx und die senkrechte Achse mit Fy bezeichnet wird, erzeugen beispielsweise die folgenden Funktionen geeignete Anteile der drei Druckfarben Or1, Or2 und K' in den Farbfeldern 4.

$$Or1 = Min( Fx , 2 \times (100 - Fy) )$$

$$Or2 = Min( Fx \times Fy / 50 , 100 )$$

$$K' = Min( Fy , 2 \times (100 - Fx) )$$

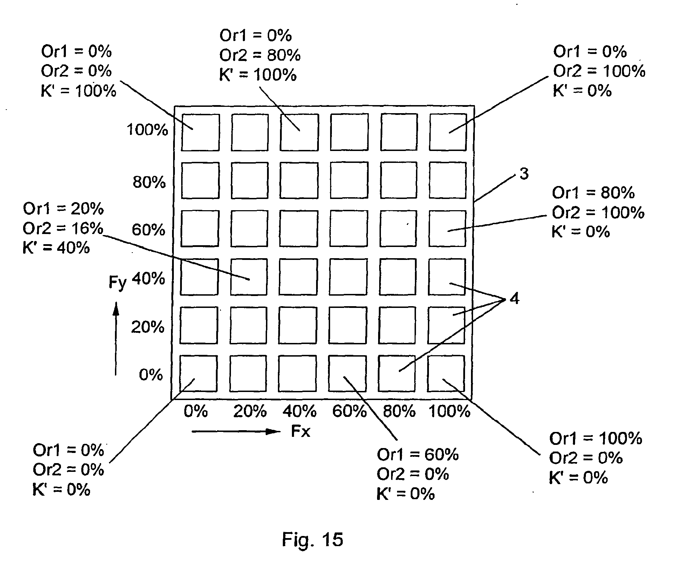

In der Fig. 15 ist für einige Farbfelder 4 angegeben, welche Kombinationen der drei Druckfarben nach diesen Funktionen erzeugt werden. Die Funktionen zur Erzeugung der Testform 3 für diesen Sonderfall können in weiten Grenzen variiert werden. Es kommt nur darauf an, dass die erzeugten Farbfelder 4 den gemeinsamen Farbumfang der Druckfarben Or1 und Or2 entsprechend Fig. 14 vollständig und vorzugsweise in etwa gleich großen Abstufungen abdecken.

Nach dem Drucken und Ausmessen der Testform 3 definieren die ermittelten Lab-Farbwerte eine gemeinsame Grenzfläche 2 für die Druckfarben Or1 und Or2. Bei der Erzeugung der Testform 6 für die beiden Farbsektoren 5, die von dieser gemeinsamen Grenzfläche 2 begrenzt werden, wird zunächst so vorgegangen, als ob die Testform mit der formalen Farbe Fx für eine der in dem Sektor beteiligten Buntfarben aufgebaut wird. Für Fx werden dann beispielsweise nach den obigen Funktionen die entsprechenden Werte für Or1 und Or2 eingesetzt.

Zur Beschreibung und Veranschaulichung des erfindungsgemäßen Verfahrens wurde als geräteunabhängiges Farbsystem das Lab-Farbsystem verwendet. Das Verfahren ist nicht auf dieses Farbsystem beschränkt sondern kann in naheliegender Weise an ein anderes geräteunabhängiges Farbsystem angepaßt werden, wie z.B. das CIEXYZ-Farbsystem oder das Luv-Farbsystem.

**Patentansprüche**

1. Verfahren zur Bestimmung eines Druckfarbprofils für das Drucken mit mehr als drei bunten Druckfarben, die einen Farbkörper der druckbaren Farben in einem geräteunabhängigen Farbsystem bilden, **dadurch gekennzeichnet, dass**

- durch eine Kombination mehrerer Druckfarben eine innere Bezugskurve (1) in dem geräteunabhängigen Farbsystem definiert wird,

- durch die Erzeugung von ersten Testformen (3), die gedruckt und farbmetrisch ausgemessen werden, Grenzflächen (2) zwischen der inneren Bezugskurve (1) und der Außenhülle des Farbkörpers definiert werden, die den Farbkörper in Farbsektoren (5) aufteilen,
- für die Farbsektoren (5) zweite Testformen (6) erzeugt werden, die gedruckt und farbmetrisch ausgemessen werden, und
- aus den Messwerten der zweiten Testformen (6) das Druckfarbprofil bestimmt wird.

2. Verfahren nach Anspruch 1,
**dadurch gekennzeichnet, dass**
die Druckfarben-Kombination der inneren Bezugskurve (1) so gewählt wird, dass diese im Innern des Druckprozess-Farbkörpers verläuft und nicht dicht am Rand.

3. Verfahren nach Anspruch 1,
**dadurch gekennzeichnet,dass**
die ersten Testformen (3) Farbfelder (4) enthalten, in denen Anteile der für die innere Bezugskurve (1) ausgewählten Druckfarben und einer bunten Druckfarbe variiert werden.

4. Verfahren nach Anspruch 1,
**dadurch gekennzeichnet, dass**
die ersten Testformen (3) Farbfelder (4) enthalten, in denen Anteile der für die innere Bezugskurve (1) ausgewählten Druckfarben und von zwei bunten Druckfarben variiert werden, deren Buntton annähernd gleich ist.

5. Verfahren nach Anspruch 1,
**dadurch gekennzeichnet, dass**
die zweiten Testformen (6) Farbfelder (7) enthalten, in denen Anteile der für die innere Bezugskurve (1) ausgewählten Druckfarben und von zwei bunten Druckfarben variiert werden.

6. Verfahren nach Anspruch 1,
**dadurch gekennzeichnet,dass**
die zweiten Testformen (6) Farbfelder (7) enthalten, in denen Anteile der für die innere Bezugskurve (1) ausgewählten Druckfarben und von drei bunten Druckfarben variiert werden, von denen zwei einen annähern gleichen Buntton haben.

7. Verfahren nach Anspruch 1,
**dadurch gekennzeichnet, dass**
das Druckfarbprofil in Form einer Tabelle beschrieben wird, in der vorgegebenen geräteunabhängigen Farbwerten die Druckfarbwerte der Druckfarben zugeordnet werden, mit denen die vorgegebenen Farben gedruckt werden können.

8. Verfahren nach einem der Ansprüche 1 bis 7,

**dadurch gekennzeichnet, dass**
das geräteunabhängige Farbsystem das Lab-Farbsystem ist.

## Claims

1. Method of determining a printing colour profile for printing with more than three coloured printing colours that form a colour solid of the printable colour in a device-independent colour system,
**characterized in that**

- an inner reference curve (1) is defined in the device-independent colour system by combining a number of printing colours,
- boundary surfaces (2) dividing the colour solid into colour sectors (5) are defined between the inner reference curve (1) and the outer envelope of the colour solid by generating first test forms (3) that are printed and measured colorimetrically,
- for the colour sectors (5), second test forms (6) are generated that are printed and measured colorimetrically, and
- the printing colour profile is determined from the measured values of the second test forms (6).

2. Method according to Claim 1,
**characterized in**
**that** the printing colour combination of the inner reference curve (1) is selected in such a way that the latter extends in the interior of the printing process colour solid rather than close to the edge.

3. Method according to Claim 1,
**characterized in**
**that** the first test forms (3) include colour fields (4) in which proportions of the printing colours selected for the inner reference curve (1) and of one coloured printing colour are varied.

4. Method according to Claim 1,
**characterized in**
**that** the first test forms (3) include colour fields (4) in which proportions of the printing colours selected for the inner reference curve (1) and of two coloured printing colours whose hue is approximately the same are varied.

5. Method according to Claim 1,
**characterized in**
**that** the second test forms (6) include colour fields (7) in which proportions of the printing colours selected for the inner reference curve (1) and of two coloured printing colours are varied.

**6.** Method according to Claim 1, **characterized in that** second test forms (6) include colour fields (7) in which proportions of the printing colours selected for the inner reference curve (1) and of three coloured printing colours are varied, at least two of which have approximately the same hue.

**7.** Method according to Claim 1, **characterized in that** the printing colour profile is described in the form of a table in which the printing colour values of the printing colours that can be used to print the predetermined colours are associated with predetermined, device-independent colour values.

**8.** Method according to any one of Claims 1 to 7, **characterized in that** the device-independent colour system is the Lab colour system.

**Revendications**

**1.** Procédé de détermination d'un profil d'encre d'impression pour l'impression avec plus de trois encres d'impression multicolores, qui forment un corps d'encres de couleurs imprimables dans un système d'encres de couleur indépendant de l'appareil, **caractérisé en ce que**

- une courbe de référence interne (1) est définie dans le système de couleur indépendant de l'appareil par une combinaison de plusieurs encres d'impression,
- des surfaces limites (2), qui divisent le corps de couleur en secteurs de couleur (5), sont définies entre la courbe de référence (1) et l'enveloppe extérieure du corps d'encres de couleurs par la production de premières formes-test (3), qui sont imprimées et mesu-rées par colorimétrie
- des secondes formes-test (6), qui ont été imprimées et mesurées par colorimétrie, sont produites pour les secteurs d'encres de couleur (5), et
- le profil d'encre d'impression est défini à partir des valeurs mesurées des secondes formes-test (6).

**2.** Procédé selon la revendication 1, **caractérisé en ce que** la combinaison d'encres d'impression de la courbe de référence interne (1) est sélectionnée de sorte que celle-ci s'étend à l'intérieur du corps d'encres de couleurs du processus d'impression et non tout près de son bord.

**3.** Procédé selon la revendication 1, **caractérisé en ce que** les premières formes-test (3) contiennent des champs couleur (4), dans lesquels des parties des encres d'impression sélectionnées pour la courbe de référence interne (1) et d'une encre d'impression colorée sont variées.

**4.** Procédé selon la revendication 1, **caractérisé en ce que** les formes-test (3) contiennent des champs couleur (4), dans lesquels des parties des encres d'impression sélectionnées pour la courbe de référence interne (1) et de deux encres d'impression colorées, dont le ton coloré est approximativement identique, sont variées.

**5.** Procédé selon la revendication 1, **caractérisé en ce que** les secondes formes-test (6) contiennent des champs couleur (7), dans lesquels des parties des encres d'impression sélectionnées pour la courbe de référence interne (1) et de deux encres d'impression colorées sont variées.

**6.** Procédé selon la revendication 1, **caractérisé en ce que** les deux formes-test (6) contiennent des champs couleur (7), dans lesquels des parties des encres d'impression sélectionnées pour la courbe de référence interne (1) et de deux encres d'impression colorées sont variées, parmi lesquelles deux présentent un ton coloré approximativement identique.

**7.** Procédé selon la revendication 1, **caractérisé en ce que** le profil d'encre d'impression est décrit sous forme d'un tableau, dans lequel les valeurs d'encre d'impression des encres d'impression avec lesquelles les couleurs prédéfinies peuvent être imprimées, sont associées à des valeurs de couleur prédéfinies indépendantes de l'appareil.

**8.** Procédé selon l'une quelconque des revendications 1 à 7, **caractérisé en ce que** le système d'encres de couleur indépendant de l'appareil est le système d'encres de couleur.

Scanner → R G B → Scanner-Farbprofil → L1 a1 b1 → Farb-korrektur → L2 a2 b2 → Druck-Farbprofil → C M Y K → Druck-maschine

Fig. 1

Fig. 2

Fig. 3

Fig. 4

Fig. 5

Fig. 6

Fig. 7

Fig. 8

Fig. 10

Fig. 9

C = 85%
M = 78%
Y = 84%
K = 95%

C = 76%
M = 90%
Y = 75%
K = 86%

100%

80%

60%

K' 40%

20%

0%

0%   20%  40%  60%  80%  100%

M

3

4

C = 0%
M = 0%
Y = 0%
K = 0%

C = 0%
M = 100%
Y = 0%
K = 0%

Fig. 11

g(M,K')

g(M,K')

1

K'

100%

0

100%

M

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5563724 A
- EP 0563498 A1
- US 4878977 A
- DE 4417449 C2
- EP 0131145 B1
- EP 0735743 A2
- EP 0586139 A2
- DE 4409226